# EUROPEAN PATENT SPECIFICATION

(11) **EP 4 242 440 B1**
(45) Date of publication and mention of the grant of the patent: **26.06.2024**
(21) Application number: 23184938.1
(22) Date of filing: 21.09.2022
(51) Int. Cl.: F02K 3/06, F02C 6/10, F02C 6/08, F02C 7/143, F02C 3/30

(54) **AIRCRAFT PROPULSION SYSTEM**
FLUGZEUGANTRIEBSSYSTEM
SYSTÈME DE PROPULSION D'AÉRONEF

(30) Priority: 18.10.2021 GB 202114829
(43) Date of publication of application: 13.09.2023
(62) Divisional of application: 22196825.8
(73) Proprietor: Rolls-Royce plc, London N1 9FX (GB)
(72) Inventor: Butler, Philip, Derby, DE24 8BJ (GB)
(74) Representative: Rolls-Royce plc

(56) References cited:
- US-A1- 2006 254 255
- US-A1- 2009 293 494
- US-A1- 2011 011 096
- US-B1- 6 296 957

## Description

### TECHNICAL FIELD

The invention relates to aircraft propulsion systems.

### BACKGROUND

Gas turbine engines in various forms (turbojet, turbofan, turbo-prop etc) have been used for aircraft propulsion for several decades. In some cases, it may be beneficial for an aircraft to be additionally provided with a fuel cell system, either for providing additional thrust in conjunction with a propulsor driven by an electric motor, or for providing electrical power to auxiliary systems of an aircraft. Typically, such a fuel cell system in this application has an air input, as in the case of a proton-exchange (or polymer electrolyte) membrane (PEM) fuel cell system for example. However, operation of such a fuel cell system generally requires compressed air input, particularly at altitude, in order for sufficient electrical power to be produced, particularly where the fuel cell system is required to provide electrical power for a propulsor comprising an electric motor. However, inclusion of compressor incurs a significant weight penalty in addition to requiring power input to drive the compressor. The overall power output/weight performance of such a fuel cell system may preclude its inclusion within certain aircraft. Provision of compressed air from a compressor of a gas turbine engine to the air input of a fuel cell system obviates the need for the fuel cell system to be provided with a dedicated air compressor. The compressed air may be compressor bleed air, compressor stage delivery air or fan delivery air of the gas turbine engine, as disclosed in patent applications US 2009/0293494 A1 and US 2006/0254255 A1 and patent US 6296 957 B1 respectively.

### BRIEF SUMMARY

According to a first aspect of the present invention, an aircraft propulsion system comprises a gas turbine engine arranged to provide propulsive thrust and a fuel cell system having an air input port, the aircraft propulsion system being configured such that bleed air from a compressor of the gas turbine engine is provided to the air input port of the fuel cell system during operation of the aircraft propulsion system, characterised in that the gas turbine engine comprises a heat-exchanger disposed between consecutive compressor stages of the gas turbine engine and in that the aircraft propulsion system is arranged such in operation thereof gaseous output comprising water vapour produced at an output port of the fuel cell system is provided to the heat-exchanger to provide cooling of compressed air between said consecutive compressor stages. The efficiency of the compressor stage downstream of the heat exchanger is thereby increased. The aircraft propulsion system may be arranged such that gaseous output from the heat exchanger provides propulsive thrust, for example by being provided to the core output flow of the gas turbine engine. In operation of the aircraft propulsion system, bleed air derived from the compressor section of the gas turbine engine is provided to the fuel cell system, avoiding the need for the fuel cell system to include a dedicated compressor.

The gas turbine engine may be a hydrogen-burning gas turbine engine, the fuel cell system being of a type using hydrogen and air as chemical inputs, the aircraft propulsion system further comprising a hydrogen storage system and a conveying system arranged to convey hydrogen from the hydrogen storage system to a hydrogen input port of the fuel cell system and to a combustor of the gas turbine engine. The fuel cell system may have a hydrogen output port, the conveying system being arranged to convey hydrogen from the hydrogen output port to the combustor of the gas turbine engine. The conveying system may be configured such that hydrogen is conveyed to the combustor of the gas turbine engine exclusively via the fuel cell system.

The aircraft propulsion system may comprise an electric motor arranged to drive a propulsor, the fuel cell system being arranged to provide electrical power to the electric motor during operation of the aircraft propulsion system.

A second aspect of the invention provides an aircraft comprising an aircraft propulsion system according to the first aspect of the invention.

### BRIEF DESCRIPTION OF THE DRAWINGS

An embodiment of the invention is described below by way of example only and with reference to the accompanying drawing .

### DETAILED DESCRIPTION

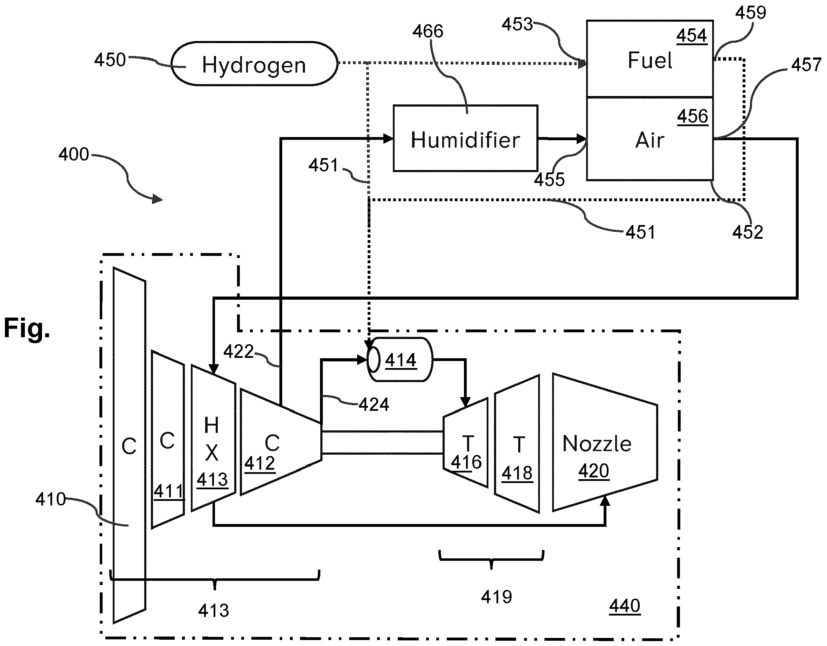

Figure 1 shows an aircraft propulsion system 400 of the invention. The aircraft propulsion system 400 comprises a hydrogen-burning gas turbine engine 440, a proton-exchange (or polymer electrolyte) (PEM) fuel cell system 452, a hydrogen storage system 450 and a hydrogen conveying system 451. The hydrogen storage system 450 may be a tank storing gaseous or liquid hydrogen, or some other type of storage system. The PEM fuel cell system 452 has anode and cathode stack sides 454, 456, hydrogen input and output ports 453, 459, an air (cathode) input port 455 and a cathode output port 457. The hydrogen-burning gas turbine engine 440 comprises a compressor section 413 comprising low-, intermediate- and high-pressure compressors 410, 411, 412, a combustor 414, a turbine section 419 comprising high- and low-pressure turbines 416, 418, and a core output nozzle 420. A heat-exchanger 413 is disposed between the intermediate- and high-pressure compressors 411, 412.

In operation of the aircraft propulsion system 400, bleed air 422 from the high-pressure compressor 412 is provided to the air input port 455 of the PEM fuel cell system 452 via a humidifier 466. The principal compressed air output of the compressor section 413 is provided to the combustor 414. Hydrogen fuel from the hydrogen storage system 450 is provided to the combustor 414 and to the hydrogen input port 453 of PEM fuel cell system 452. Additionally, hydrogen is conveyed by the conveying system 451 from the hydrogen output port 459 of PEM fuel cell system 452 to the combustor 414. The heat exchanger 413 is arranged to receive gaseous output comprising air and water vapour from the cathode output port 457 of the PEM fuel cell system 452. Air passing from the intermediate compressor 411 to the high-pressure compressor 413 is cooled by the heat exchanger 413, increasing the efficiency of the high-pressure compressor 412. Gaseous output from the heat exchanger is provided to the core output nozzle 420 of gas turbine engine 440, contributing to the core output flow of engine 440 and thereby contributing to the thrust produced by the propulsion system 400.

## Claims

1. An aircraft propulsion system (400) comprising a gas turbine engine (440) arranged to provide propulsive thrust and a fuel cell system (452) having an air input port (455), wherein the aircraft propulsion system is configured such that bleed air from a compressor (412) of the gas turbine engine is provided to the air input port (455) of the fuel cell system during operation of the aircraft propulsion system, **characterised in that** the gas turbine engine comprises a heat-exchanger disposed between consecutive compressor stages of the gas turbine engine and **in that** the aircraft propulsion system is arranged such that in operation thereof gaseous output comprising water vapour produced at an output port of the fuel cell system is provided to the heat-exchanger to provide cooling of compressed air between said consecutive compressor stages.

2. An aircraft propulsion system (400) according to claim 1 configured such that gaseous output from the heat exchanger provides propulsive thrust during operation of the aircraft propulsion system.

3. An aircraft propulsion system (400) according to claim 2 configured such that gaseous output from the heat exchanger is provided to the core output flow of the gas turbine engine during operation of the aircraft propulsion system.

4. An aircraft propulsion system (400) according any preceding claim wherein the gas turbine engine is a hydrogen-burning gas turbine engine and the fuel cell system has a hydrogen input port (453), the aircraft propulsion system further comprising a hydrogen storage system (450) and a conveying system (451) arranged to convey hydrogen from the hydrogen storage system to the hydrogen input port of the fuel cell system and to a combustor (414) of the gas turbine engine.

5. An aircraft propulsion system (400) according to claim 4 wherein the fuel cell system (452) has a hydrogen output port (459) and the conveying system (451) is arranged to convey hydrogen from the hydrogen output port to the combustor of the hydrogen-burning gas turbine engine.

6. An aircraft propulsion system (400) according to claim 5 wherein the conveying system (451) is arranged to convey hydrogen to the combustor (414) of the hydrogen-burning gas turbine engine exclusively via the fuel cell system (452).

7. An aircraft propulsion system according to any preceding claim and further comprising an electric motor arranged to drive a propulsor, the fuel cell system being arranged to provide electrical power to the electric motor during operation of the aircraft propulsion system.

8. An aircraft comprising an aircraft propulsion system according to any preceding claim.

## Patentansprüche

1. Luftfahrzeugantriebssystem (400), umfassend ein Gasturbinentriebwerk (440), das zum Bereitstellen von Antriebsschub angeordnet ist, und ein Brennstoffzellensystem (452), das einen Lufteingangsanschluss (455) aufweist, wobei das Luftfahrzeugantriebssystem so konfiguriert ist, dass während des Betriebs des Luftfahrzeugantriebssystems Zapfluft von einem Verdichter (412) des Gasturbinentriebwerks dem Lufteingangsanschluss (455) des Brennstoffzellensystems bereitgestellt wird, **dadurch gekennzeichnet, dass** das Gasturbinentriebwerk einen Wärmetauscher umfasst, der zwischen aufeinanderfolgenden Verdichterstufen des Gasturbinentriebwerks positioniert ist, und dadurch, dass das Luftfahrzeugantriebssystem so angeordnet ist, dass bei einem Betrieb davon eine gasförmiger Ausgabe, die Wasserdampf umfasst, der an einem Ausgabeanschluss des Brennstoffzellensystems erzeugt wird, dem Wärmetauscher bereitgestellt wird, um eine Kühlung der verdichteten Luft zwischen den aufeinanderfolgenden Verdichterstufen bereitzustellen.

2. Luftfahrzeugantriebssystem (400) nach Anspruch 1, das so konfiguriert ist, dass die gasförmige Ausgabe aus dem Wärmetauscher während des Betriebs des Luftfahrzeugantriebssystems einen Antriebsschub bereitstellt.

3. Luftfahrzeugantriebssystem (400) nach Anspruch 2, das so konfiguriert ist, dass während des Betriebs des Luftfahrzeugantriebssystems die gasförmige Ausgabe aus dem Wärmetauscher dem Kernausgabestrom des Gasturbinentriebwerks bereitgestellt wird.

4. Luftfahrzeugantriebssystem (400) nach einem vorhergehenden Anspruch, wobei das Gasturbinentriebwerk ein wasserstoffverbrennendes Gasturbinentriebwerk ist und das Brennstoffzellensystem einen Wasserstoffeingangsanschluss (453) aufweist, wobei das Luftfahrzeugantriebssystem ferner ein Wasserstoffspeichersystem (450) und ein Fördersystem (451) umfasst, das dazu angeordnet ist, Wasserstoff von dem Wasserstoffspeichersystem zu dem Wasserstoffeingangsanschluss des Brennstoffzellensystems und zu einer Brennkammer (414) des Gasturbinentriebwerks zu befördern.

5. Luftfahrzeugantriebssystem (400) nach Anspruch 4, wobei das Brennstoffzellensystem (452) einen Wasserstoffausgabeanschluss (459) aufweist und das Fördersystem (451) dazu angeordnet ist, Wasserstoff von dem Wasserstoffausgabeanschluss zu der Brennkammer des wasserstoffverbrennenden Gasturbinentriebwerks zu befördern.

6. Luftfahrzeugantriebssystem (400) nach Anspruch 5, wobei das Fördersystem (451) dazu angeordnet ist, Wasserstoff ausschließlich über das Brennstoffzellensystem (452) zu der Brennkammer (414) des wasserstoffverbrennenden Gasturbinentriebwerks zu befördern.

7. Luftfahrzeugantriebssystem nach einem vorhergehenden Anspruch und ferner einen Elektromotor umfassend, der dazu angeordnet ist, einen Antrieb zu betreiben, wobei das Brennstoffzellensystem dazu angeordnet ist, dem Elektromotor während des Betriebs des Luftfahrzeugantriebssystems elektrische Leistung bereitzustellen.

8. Luftfahrzeug, umfassend ein Luftfahrzeugantriebssystem nach einem vorhergehenden Anspruch.

## Revendications

1. Système de propulsion d'aéronef (400) comprenant un moteur à turbine à gaz (440) agencé pour fournir une poussée propulsive et un système de pile à combustible (452) comportant un orifice d'entrée d'air (455), ledit système de propulsion d'aéronef étant conçu de sorte que l'air de prélèvement provenant d'un compresseur (412) du moteur à turbine à gaz soit fourni à l'orifice d'entrée d'air (455) du système de pile à combustible durant le fonctionnement du système de propulsion d'aéronef, **caractérisé en ce que** le moteur à turbine à gaz comprend un échangeur de chaleur disposé entre des étages de compresseur consécutifs du moteur à turbine à gaz et **en ce que** le système de propulsion d'aéronef est agencé de sorte que lors du fonctionnement de celui-ci une sortie gazeuse comprenant de la vapeur d'eau produite au niveau d'un orifice de sortie du système de pile à combustible soit fournie à l'échangeur de chaleur pour assurer le refroidissement de l'air comprimé entre lesdits étages de compresseur consécutifs.

2. Système de propulsion d'aéronef (400) selon la revendication 1, conçu de sorte que la sortie gazeuse en provenance de l'échangeur thermique fournisse une poussée propulsive durant le fonctionnement du système de propulsion d'aéronef.

3. Système de propulsion d'aéronef (400) selon la revendication 2, conçu de sorte que la sortie gazeuse en provenance de l'échangeur de chaleur soit fournie au flux de sortie de noyau du moteur à turbine à gaz durant le fonctionnement du système de propulsion d'aéronef.

4. Système de propulsion d'aéronef (400) selon une quelconque revendication précédente, ledit moteur à turbine à gaz étant un moteur à turbine à gaz brûlant de l'hydrogène et ledit système de pile à combustible comportant un orifice d'entrée d'hydrogène (453), le système de propulsion d'aéronef comprenant en outre
un système de stockage d'hydrogène (450) et un système de transport (451) agencé pour transporter l'hydrogène du système de stockage d'hydrogène jusqu'à l'orifice d'entrée d'hydrogène du système de pile à combustible et jusqu'à une chambre de combustion (414) du moteur à turbine à gaz.

5. Système de propulsion d'aéronef (400) selon la revendication 4, ledit système de pile à combustible (452) comportant un orifice de sortie d'hydrogène (459) et ledit système de transport (451) étant agencé pour transporter l'hydrogène à partir de l'orifice de sortie d'hydrogène jusqu'à la chambre de combustion du moteur à turbine à gaz brûlant de l'hydrogène.

6. Système de propulsion d'aéronef (400) selon la revendication 5, ledit système de transport (451) étant agencé pour transporter l'hydrogène jusqu' à la chambre de combustion (414) du moteur à turbine à gaz brûlant de l'hydrogène exclusivement par l'intermédiaire du système de pile à combustible (452).

7. Système de propulsion d'aéronef selon une quelconque revendication précédente et comprenant en outre un moteur électrique agencé pour entraîner un propulseur, le système de pile à combustible étant agencé pour fournir de l'énergie électrique au moteur électrique durant le fonctionnement du système de propulsion d'aéronef.

8. Aéronef comprenant un système de propulsion d'aéronef selon une quelconque revendication précédente.
